# EUROPÄISCHE PATENTSCHRIFT

(11) **EP 0 803 524 B1**
(45) Veröffentlichungstag und Bekanntmachung des Hinweises auf die Patenterteilung: **26.11.2003**
(21) Anmeldenummer: 97106063.7
(22) Anmeldetag: 14.04.1997
(51) Int. Cl.: C08G 18/79, C08G 18/20, C08G 18/42, C09D 175/04, C09D 5/03, C08G 18/18

(54) **Abspalterfreier Polyurethan-Pulverlack mit niedriger Einbrenntemperatur**
Polyurethane powder coating not releasing any decomposition products and having a low baking temperature
Vernis de polyuréthane pulvérulent ne relâchant pas de produits de décomposition et ayant une température basse de cuisson au four

(30) Priorität: 25.04.1996 DE 19616496
(43) Veröffentlichungstag der Anmeldung: 29.10.1997
(73) Patentinhaber: BAYER AG, 51368 Leverkusen (DE)
(72) Erfinder: Laas, Hans-Josef, Dr., 50733 Köln (DE); Meier-Westhues, Hans-Ulrich, Dr., 51379 Leverkussen (DE); Halpaap, Reinhard, Dr.r., 51519 Odenthal (DE); Freudenberg, Ulrich, Dr., 50259 Pulheim (DE); Klee, Hans-Peter, Dipl.-Ing, 51399 Burscheid (DE)

(56) Entgegenhaltungen:
- FR-A- 1 542 058
- FR-A- 2 391 235

## Beschreibung

Die Erfindung betrifft bei niedrigen Einbrenntemperaturen aushärtbare Polyurethan-Pulverlacke enthaltend A) eine Hydroxylgruppen aufweisende Bindemittelkomponente, B) eine Uretdiongruppen und gegebenenfalls freie Isocyanatgruppen aufweisende Polyadditionsverbindung als Vernetzer, C) mindestens einen N,N,N'-trisubstituierte Amidinstrukturen enthaltenden Katalysator, gegebenenfalls D) weitere aus der Polyurethanchemie bekannte Katalysatoren und gegebenenfalls E) an sich bekannte Hilfs- und Zusatzmittel, sowie die Verwendung des Pulverlacks zur Beschichtung beliebiger hitzeresistenter Substrate.

Unter dem Druck einer immer strengeren Umweltgesetzgebung . gewann in den letzten Jahren die Entwicklung von Pulverlacken neben high-solids-Lacken und wäßrigen Beschichtungssystemen zunehmend an Bedeutung. Pulverlacke setzen bei der Applikation keinerlei schädliche Lösemittel frei, lassen sich mit sehr hohem Materialausnutzungsgrad verarbeiten und gelten daher als besonders umweltfreundlich und wirtschaftlich.

Qualitativ besonders hochwertige, licht- und wetterbeständige Beschichtungen lassen sich mit hitzehärtbaren Pulverlacken auf Polyurethanbasis herstellen. Die heute im Markt etablierten Polyurethan-(PUR)-Pulverlacke bestehen im allgemeinen aus festen Polyesterpolyolen, die mit festen blockierten aliphatischen oder meist cycloaliphatischen Polyisocyanaten ausgehärtet werden. Diese Systeme weisen allerdings den Nachteil auf, daß bei der thermischen Vernetzung die als Blockierungsmittel eingesetzten Verbindungen abgespalten wurden und überwiegend entweichen. Deshalb müssen bei ihrer Verarbeitung aus apparativen Gründen sowie aus Gründen der Ökologie und Arbeitshygiene besondere Vorkehrungen zur Reinigung der Abluft und/oder Wiedergewinnung des Blockierungsmittels getroffen werden.

Eine Möglichkeit, die Emission von Blockierungsmitteln zu umgehen, stellen die bekannten Uretdiongruppen aufweisenden PUR-Pulverlackvernetzer dar (z. B. DE-A 2 312 391, DE-A 2 420 475, EP-A 45 994, EP-A 45 996, EP-A 45 998, EP-A 639 598 oder EP-A 669 353). Als Vernetzungsprinzip wird bei diesen Produkten die thermische Rückspaltung von Uretdiongruppen in freie Isocyanatgruppen und deren Reaktion mit dem hydroxyfunktionellen Bindemittel genutzt. In der Praxis finden Uretdionpulverlackvernetzer bis heute allerdings nur wenig Verwendung. Die Ursache hierfür liegt in der vergleichsweise geringen Reaktivität der intern blockierten Isocyanatgruppen, die in der Regel Einbrenntemperaturen von mindestens 160°C erforderlich macht.

Obwohl bekannt ist, daß die Aufspaltung von Uretdiongruppen insbesondere in Gegenwart hydroxylgruppenhaltiger Reaktionspartner bereits ab etwa 100°C merklich einsetzt, verläuft die Reaktion in diesem Temperaturbereich noch derart langsam, daß zur vollständigen Aushärtung von Lackfilmen für einen praktischen Einsatz unrealistisch lange Zeiten von mehreren Stunden benötigt werden. Zwar werden in der DE-A 2 420 475, der DE-A 2 502 934 oder EP-A 639 598 als mögliche Einbrennbedingungen für uretdiongruppenhaltige Pulverlacksysteme bereits Temperaturen ab 110°C, in der DE-A 2 312 391 sogar Temperaturen ab 90°C genannt, die konkret beschriebenen Ausführungsbeispiele zeigen allerdings, daß sich auch mit den in diesen Veröffentlichungen beschriebenen Pulverlacken ausreichend vernetzte Beschichtungen unter praxisnahen Einbrennzeiten von maximal 30 min erst ab Temperaturen von 150 bis 160°C erhalten lassen.

Es hat nicht an Versuchen gefehlt, die Aushärtung von uretdionvernetzenden PUR-Pulverlacken durch Mitverwendung geeigneter Katalysatoren zu beschleunigen. Zu diesem Zweck wurden bereits unterschiedliche Verbindungen vorgeschlagen, beispielsweise die aus der Polyurethanchemie bekannten metallorganischen Katalysatoren, wie Zinn(II)-acetat, Zinn(II)-octoat, Zinn(II)-ethylcaproat, Zinn(II)-laurat, Dibutylzinndiacetat, Dibutylzinndilaurat, Dibutylzinnmaleat (z. B. EP-A 45 994, EP-A 45 998, EP-A 601 079, WO 91/07452 oder DE-A 24 20 475), Eisen(III)-chlorid, Zinkchlorid, Zink-2-ethylcaproat und Molybdänglykolat oder tertiäre Amine, wie Triethylamin, Pyridin, Methylpyridin, Benzyldimethylamin, N,N-Endoethylenpiperazin, N-Methylpiperidin, Pentamethyldiethylentriamin, N,N-Dimethylaminocyclohexan und N,N'-Dimethylpiperazin (z. B. EP-A 639 598).

In der Praxis kommen im allgemeinen zinnorganische Verbindungen der genannten Art zum Einsatz. Sie gestatten die Formulierung blockierungsmittelfreier Uretdionpulverlacke, die sicher und reproduzierbar beispielsweise innerhalb von 30 min bei einer Temperatur von 150°C, oder, wenn kürzere Taktzeiten erwünscht sind, beispielsweise innerhalb von 15 min bei 180°C zu Beschichtungen guter Lösemittelbeständigkeit und Elastizität ausreagieren.

Aufgabe der vorliegenden Erfindung war es nun, neue abspalterfreie PUR-Pulverlacke mit höherer Reaktivität zur Verfügung zu stellen, die bei deutlich niedrigeren Einbrenntemperaturen bzw. entsprechend kürzeren Einbrennzeiten als die bislang bekannten, Uretdionhärter enthaltenden Pulverlacke des Standes der Technik völlig vernetzte Lackfilme ergeben.

Diese Aufgabe konnte mit der Bereitstellung der nachfolgend näher beschriebenen erfindungsgemäßen Polyurethanpulverlacke gelöst werden. Die erfindungsgemäßen Pulverlacke basieren auf der überraschenden Beobachtung, daß N,N,N'-tri-substituierte Amidinstrukturen enthaltende Verbindungen, insbesondere bicyclische Amidine, wie 1,5-Diazabicyclo[4.3.0]non-5-en (DBN), die Rückspaltung von Uretdiongruppen so stark beschleunigen, daß sich mit ihrer Hilfe unter Verwendung der bekannten Uretdionhärter PUR-Pulverlacke formulieren lassen, die bereits bei vergleichsweise niedrigen Einbrenntemperaturen und in kurzer Zeit zu qualitativ hochwertigen Beschichtungen vernetzen.

Zwar werden in der EP-A 652 263, die die Verwendung uretdiongruppenhaltiger Pulverlackhärter als Additiv für Pulverlacke auf Basis epoxyfunktioneller Copolymerisate und Carboxylderivaten als Vernetzer beschreibt, innerhalb einer langen Liste gegebenenfalls mitzuverwendender Aushärtekatalysatoren auch die beiden Amidinbasen DBN und 1,8-Diazabicyclo[5.4.0]undec-7-en (DBU) pauschal miterwähnt, der Fachmann konnte dieser Veröffentlichung jedoch keinerlei konkreten Hinweis daraufhin entnehmen, daß gerade diese beiden Verbindungen die Rückspaltung von Uretdionringen in hohem Maße katalysieren, insbesondere auch deshalb nicht, weil im Rahmen der konkret beschriebenen Ausführungsbeispiele keineswegs diese beiden, wie erst jetzt gefunden wurde, für die Uretdionspaltung besonders wirksamen Katalysatoren verwendet werden, sondern ein metallorganischer Katalysator, wie er üblicherweise auch in den bekannten uretdiongruppenhaltigen PUR-Pulverlacken eingesetzt wird. Die niedrigen Einbrenntemperaturen der in der EP-A 652 263 beschriebenen Pulversysteme sind nicht auf eine durch Katalyse mit Amidinbasen beschleunigte Uretdionspaltung zurückzuführen; sondern liegen vielmehr im für Epoxid/Dicarbonsäure-Systeme üblichen Bereich.

Gegenstand der vorliegenden Erfindung ist ein Polyurethan-Pulverlack, enthaltend
A) eine unterhalb von 40°C in fester und oberhalb von 130°C in flüssiger Form vorliegende Hydroxylgruppen aufweisende Bindemittelkomponente mit einer OH-Zahl von 25 bis 200 und einem mittleren (aus der Funktionalität und dem Hydroxylgehalt berechenbaren) Molekulargewicht von 400 bis 10000,
B) eine unterhalb von 40°C in fester und oberhalb von 125°C in flüssiger Form vorliegende Uretdiongruppen und gegebenenfalls freie Isocyanatgruppen aufweisende Polyadditionsverbindung auf Basis aliphatischer und/oder cycloaliphatischer Diisocyanate,
C) mindestens einen N,N,N'-trisubstituierte Amidinstrukturen enthaltenden Katalysator mit einem Amidingruppengehalt (berechnet als CN₂; Molekulargewicht = 40) von 12,0 bis 47,0 Gew.-%,
   gegebenenfalls
D) weitere aus der Polyurethanchemie bekannte Katalysatoren
   und gegebenenfalls
E) weitere aus der Pulverlacktechnologie bekannte Hilfs- und Zusatzstoffe,
mit der Maßgabe, daß die Komponenten A) und B) in solchen Mengenverhältnissen vorliegen, daß auf jede Hydroxylgruppe der Komponente A) 0,6 bis 1,4 Isocyanatgruppen der Komponente B) entfallen, wobei unter Isocyanatgruppen der Komponente B) die Summe aus in dimerer Form als Uretdiongruppen vorliegenden Isocyanatgruppen und freien Isocyanatgruppen verstanden wird, und der Anteil der Komponente C) an der Gesamtmenge der Komponenten A) bis E) 0,05 bis 5 Gew.-% beträgt.

Gegenstand der Erfindung ist auch die Verwendung dieses Pulverlackes zur Beschichtung beliebiger hitzeresistenter Substrate.

Bei der in den erfindungsgemäßen Pulverlacken enthaltenen Komponente A) handelt es sich um beliebige aus der Pulverlacktechnologie bekannte Hydroxylgruppen aufweisende Bindemittel mit einer Hydroxylzahl von 25 bis 200, vorzugsweise von 30 bis 150, und einem mittleren (aus der Funktionalität und dem Hydroxylgehalt berechenbaren) Molekulargewicht von 400 bis 10000, vorzugsweise von 1000 bis 5000, die unterhalb von 40°C fest und oberhalb 130°C flüssig sind.

Derartige Bindemittel sind beispielsweise hydroxylgruppenhaltige Polyester, Polyacrylate oder Polyurethane, wie sie z. B. in der EP-A 45 998 oder der EP-A 254 152 als Pulverlackbindemittel beschrieben sind, aber auch beliebige Mischungen solcher Harze.

Bevorzugt handelt es sich bei der Komponente A) um hydroxylgruppenhaltige Polyester, deren Erweichungstemperatur - bestimmt nach der Differential-Thermoanalyse (DTA) - innerhalb des Temperaturbereiches von 40 bis 120°C, besonders bevorzugt innerhalb des Temperaturbereiches von 45 bis 110°C, liegt.

Bei der in den erfindungsgemäßen Pulverlacken enthaltenen Komponente B) handelt es sich um Uretdiongruppen und gegebenenfalls freie Isocyanatgruppen aufweisende Polyadditionsverbindungen auf Basis aliphatischer und/oder cycloaliphatischer Diisocyanate, insbesondere um solche auf Basis von 1,6-Hexamethylendiisocyanat (HDI), 1-Isocyanato-3,3,5-trimethyl-5-isocyanatomethylcyclohexan (Isophorondiisocyanat, IPDI), 4,4'-Diisocyanatodicyclohexylmethan, 1,3-Diisocyanato-2(4)-methylcyclohexan oder beliebiger Gemische dieser Diisocyanate, wobei HDI und IPDI besonders bevorzugt sind.

Die Herstellung solcher Polyadditionsverbindungen durch Umsetzung Uretdiongruppen aufweisender Polyisocyanate mit gegenüber Isocyanatgruppen reaktiven difunktionellen und gegebenenfalls monofunktionellen Verbindungen, insbesondere zweiwertigen und gegebenenfalls einwertigen Alkoholen ist prinzipiell bekannt und wird beispielsweise in der DE-A 2 420 475 oder den EP-A 45 996 und 45 998 beschrieben. Die als Komponente B) in Betracht kommenden Uretdiongruppen und gegebenenfalls freie Isocyanatgruppen aufweisenden Polyadditionsverbindungen weisen im allgemeinen einen Gehalt an Uretdiongruppen (berechnet als C₂N₂O₂, Molekulargewicht = 84) von 3 bis 17 Gew.-% auf. Der Schmelzpunkt bzw. Schmelzbereich dieser Verbindungen liegt im allgemeinen innerhalb des Temperaturbereiches von 40 bis 125°C.

Als Komponente B) besonders bevorzugte Uretdiongruppen aufweisende Polyadditionsverbindungen sind solche, die
a) einen Gehalt an freien Isocyanatgruppen (berechnet als NCO; Molekulargewicht = 42) von 0 bis 2 Gew.-%,
b) einen Gehalt an Uretdiongruppen (berechnet als C₂N₂O₂; Molekulargewicht = 84) von 3 bis 16 Gew.-%,
c) einen Gehalt an Urethangruppen (berechnet als CHNO₂; Molekulargewicht = 59) von 10 bis 22 Gew.-%,
d) einen Gehalt an Carbonsäureestergruppen (berechnet als CO₂; Molekulargewicht = 44) von 0 bis 20 Gew.-%
   und/oder
e) einen Gehalt an Carbonatgruppen (berechnet als CO₃; Molekulargewicht = 60) von 0 bis 25 Gew.-%
aufweisen, mit der Maßgabe, daß der Gesamtgehalt an Carbonsäureester- und Carbonatgruppen mindestens 1 Gew.-% beträgt.

Die Herstellung solcher Uretdiongruppen aufweisender Polyadditionsverbindungen geschieht gemäß der Lehre der EP-A 639 598 durch Umsetzung von
I) Uretdiongruppen aufweisenden Polyisocyanaten einer mittleren Isocyanatfunktionalität von 2,0, gegebenenfalls unter Mitverwendung von
II) weiteren Diisocyanaten in einer Menge von bis zu 70 Gew.-%, bezogen auf das Gesamtgewicht der Komponenten I) und II), mit
III) Estergruppen und/oder Carbonatgruppen aufweisenden Diolen eines mittleren Molekulargewichts von 134 bis 1200, gegebenenfalls unter gleichzeitiger Mitverwendung von
IV) Estergruppen- und Carbonatgruppen-freien Diolen eines Molekulargewichtsbereichs von 62 bis 300 in einer Menge von bis zu 80 Gew.-%, bezogen auf das Gesamtgewicht der Komponenten III) und IV), und/oder gegebenenfalls
V) weiteren gegenüber Isocyanatgruppen reaktiven, monofunktionellen Verbindungen in einer Menge von bis zu 40 Gew.-%, bezogen auf das Gesamtgewicht der Komponenten III), IV) und V)
unter Einhaltung eines Äquivalentverhältnisses von Isocyanatgruppen zu gegenüber Isocyanaten reaktiven Gruppen von 1,2:1 bis 0,6:1.

Die Komponente B) wird in dem erfindungsgemäßen Pulverlack in solchen Mengen eingesetzt, daß auf jede Hydroxylgruppe der Bindemittelkomponente A) 0,6 bis 1,4, vorzugsweise 0,8 bis 1,2 Isocyanatgruppen der Komponente B) entfallen, wobei unter Isocyanatgruppen der Komponente B) die Summe aus in dimerer Form als Uretdiongruppen vorliegenden Isocyanatgruppen und freien Isocyanatgruppen verstanden wird.

Zur Beschleunigung der Aushärtung enthalten die erfindungsgemäßen Pulverlacke N,N,N'-trisubstituierte Amidinstrukturen enthaltende Katalysatoren C) mit einem Gehalt an Amidingruppen (berechnet als CN₂; Molekulargewicht = 40) von 12,0 bis 47,0 Gew.-%, vorzugsweise von 15,0 bis 40,0 Gew.-%. Geeignete Katalysatoren C) sind beliebige gegebenenfalls substituierte Alkyl- Aralkyl- oder Arylreste tragende Amidinbasen, wobei die CN-Doppelbindung der Amidinstruktur sowohl Teil eines offenkettigen Moleküls als auch Bestandteil eines cyclischen oder bicyclischen Systems oder auch exocyclisch an einem Ringsystem angeordnet sein kann, oder beliebige Mischungen solcher Amidine.

Geeignete Amidinkatalysatoren C), in denen die CN-Doppelbindung als Teil eines offenkettigen Moleküls vorliegt, sind beispielsweise N,N-Dimethyl-N'-phenylformamidin oder N,N,N'-Trimethylformamidin, deren Herstellung z. B. in Chem. Ber. 98, 1078 (1965) beschrieben ist. Als Beispiele für geeignete Amidine C), bei denen die CN-Doppelbindung Bestandteil eines cyclischen Systems ist, seien hier genannt: in 1-Stellung substituierte 2-Methyltetrahydropyrimidine, wie sie z. B. nach der Lehre der DE-A 2 439 550 durch Umsetzung von N-monosubstituierten 1,3-Propandiaminen mit Acetessigsäurederivaten erhalten werden können, oder monocyclische Amidinbasen, wie sie die gemäß DE-A 1 078 568 durch Reaktion von Carbamoylchloriden aus sek. Aminen mit Lactamen zugänglich sind. Geeignete Katalysatoren C), bei denen die CN-Doppelbindung exocyclisch an einem Ringsystem angeordnet ist sind beispielsweise Imine N-alkylsubstituierter Lactame, wie 2-Methylimino-1-methyl-pyrrolidon, dessen Herstellung z. B. in Chem. Ber. 101, 3002 (1968) beschrieben ist.

Bevorzugt kommen in dem erfindungsgemäßen Pulverlack als Komponente C) jedoch bicyclische, N,N,N'-trisubstituierte Amidinstrukturen enthaltende Katalysatoren der allgemeinen Formel 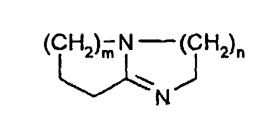 zum Einsatz, in welcher m für eine ganze Zahl von 1 bis 9, vorzugsweise von 1 bis 3, und n für eine ganze Zahl von 1 bis 3, vorzugsweise für 2, steht.

Die Herstellung solcher bicyclischen Amidine ist bekannt und beispielsweise in der DE-A 1 545 855 oder der EP-A 662 476 beschrieben. Besonders bevorzugter Katalysator C) für den erfindungsgemäßen Pulverlack ist 1,5-Diazabicyclo[4.3.0]non-5-en (DBN).

Die Katalysatoren C) kommen in den erfindungsgemäßen Pulverlacken in einer Menge von 0,05 bis 5 Gew.-%, vorzugsweise von 0,1 bis 3 Gew.-% bezogen auf die Gesamtmenge der Komponenten A) bis E) zum Einsatz.

Gegebenenfalls können im erfindungsgemäßen Pulverlack als weitere Katalysatoren D) die üblichen, bereits oben beschriebenen aus der Polyurethanchemie bekannten Verbindungen mitverwendet werden. Falls überhaupt, werden diese zusätzlichen Katalysatoren D) in einer Menge bis zu 4 Gew.-%, vorzugsweise bis zu 2,4 Gew.-%, bezogen auf die Gesamtmenge der Komponenten A) bis E) eingesetzt, mit der Maßgabe, daß die Gesamtmenge aller im Pulverlack enthaltenen Katalysatoren C) und D) 0,05 bis 5 Gew.-%, vorzugsweise 0,1 bis 3 Gew.-% beträgt, wobei der Anteil der erfindungswesentlichen Amidinkatalysatoren C) an dieser Gesamtmenge C) und D) mindestens 20 Gew.-% beträgt.

Gegebenenfalls kann der erfindungsgemäße Pulverlack auch die üblichen aus der Pulverlacktechnologie bekannten Hilfs- und Zusatzstoffe E) enthalten. Hierbei handelt es sich beispielsweise um Verlaufsmittel, wie z. B. Polybutylacrylat, oder solche auf Basis von Polysilikonen, Lichtschutzmittel, wie z. B. sterisch gehinderte Amine, UV-Absorber, wie z. B. Benztriazole oder Benzophenone, Pigmente, wie z. B. Titandioxid, oder auch Farbstabilisatoren gegen die Gefahr der Überbrennvergilbung, wie z. B. gegebenenfalls inerte Substituenten aufweisende, Trialkyl- und/oder Triarylphosphite, wie Triethylphosphit und Triphenylphosphit oder bevorzugt Trisnonylphenylphosphit.

Zur Herstellung des fertigen Pulverlackes werden die Bestandteile A), B), C) und gegebenenfalls D) und E) innig miteinander vermischt und anschließend in der Schmelze zu einem homogenen Material vereinigt. Dies kann in geeigneten Aggregaten, beispielsweise beheizbaren Knetern, vorzugsweise jedoch durch Schmelzextrusion erfolgen, wobei die Extrusionstemperatur im allgemeinen so gewählt wird, daß ein Maximum an Scherkräften auf die Mischung einwirkt. Um eine vorzeitige Vernetzung des Pulverlackes zu vermeiden, sollte dabei allerdings eine Temperaturobergrenze von 110°C nicht überschritten werden.

Die Reihenfolge der Vereinigung der Einzelkomponenten A) bis E) ist bei diesem Verfahren weitgehend frei wählbar.

Unabhängig davon werden die Mengenverhältnisse der Einzelkomponenten A) bis E), wie bereits oben aufgeführt, im übrigen so gewählt, daß auf jede Hydroxylgruppe der Komponente A) 0,6 bis 1,4, vorzugsweise 0,8 bis 1,2 Isocyanatgruppen der Komponente B), wobei unter Isocyanatgruppen der Komponente B) die Summe aus in dimerer Form als Uretdiongruppen vorliegenden Isocyanatgruppen und freien Isocyanatgruppen verstanden wird, und der Anteil der Komponente C) an der Gesamtmenge der Komponenten A) bis E) 0,05 bis 5 Gew.-%, vorzugsweise 0,1 bis 3 Gew.-% beträgt.

Die extrudierte Masse wird nach Abkühlen auf Raumtemperatur und nach einer geeigneten Vorzerkleinerung zu einem Pulverlack gemahlen und durch Sieben von den Kornanteilen oberhalb der gewünschten Korngröße, beispielsweise oberhalb 0,1 mm, befreit.

Die so hergestellten Pulverlackformulierungen können nach üblichen Pulverauftragsverfahren, wie z. B. elektrostatischem Pulversprühen oder Wirbelsintem, auf die zu überziehenden Substrate aufgebracht werden. Die Härtung der Überzüge erfolgt durch Erhitzen auf Temperaturen von 110 bis 220°C, vorzugsweise 130 bis 200°C, beispielsweise während eines Zeitraums von ca. 5 bis 30 Minuten. Man erhält bereits bei weitaus niedrigeren Einbrenntemperaturen bzw. kürzeren Einbrennzeiten als mit vergleichbaren aber ohne die Mitverwendung von Amidinkatalysatoren formulierten Uretdionpulverlacken glänzende, harte und elastische Beschichtungen, die sich durch einen hervorragenden Verlauf sowie gute Lösemittel- und Chemikalienbeständigkeit auszeichnen.

Erfindungsgemäß können beliebige hitzeresistente Substrate, wie beispielsweise solche aus Glas oder Metallen beschichtet werden.

### Beispiele

Alle Prozentangaben, mit Ausnahme der Glanzwerte, beziehen sich auf das Gewicht.

### Ausgangsverbindungen

### Herstellung einer uretdiongruppenhaltigen Polyadditionsverbindung B) (analog EP-A 639 598)

### a) Herstellung eines Estergruppen aufweisenden Diols:

901 g 1,4-Butandiol und 1712 g ε-Caprolacton werden bei Raumtemperatur unter Stickstoffatmosphäre vermischt, mit 0,3 g Zinn(II)octoat versetzt und anschließend 5 Stunden auf 160°C erhitzt. Nach Abkühlen auf Raumtemperatur erhält man ein farbloses, flüssiges Produkt mit folgenden Kenndaten:

| | |
|---|---|
| η (23°C) | 180 mPas |
| OH-Zahl | 416 mg KOH/g |
| freies Caprolacton | 0,2 % |
| mittleres Molekulargewicht (aus OH-Zahl ber.) | 269 |
| Estergruppengehalt (ber.) | 25,3 % |

### b) Herstellung der Estergruppen- und Uretdiongruppen aufweisenden Komponente B):

1000 g (4,3 val) eines uretdiongruppenhaltigen Polyisocyanates auf Basis von 1-Isocyanato-3,3,5-trimethyl-5-isocyanatomethyl-cyclohexan (IPDI) mit einem Gehalt an freien Isocyanatgruppen von 17,9 % und einem Gehalt an Uretdiongruppen (bestimmt durch Heißtitration) von 19,1 % werden unter trockenem Stickstoff auf 80°C erwärmt. Anschließend gibt man innerhalb von 30 Min. eine Mischung von 457 g (3,4 val) des Estergruppen aufweisenden Diols aus a) und 117 g (0,9 val) 2-Ethyl-1-hexanol zu und rührt bei einer Reaktionstemperatur von max. 105°C, bis der NCO-Gehalt des Reaktionsgemisches nach ca. 2 h auf einen Wert von 0,7 % abgesunken ist.

Die Schmelze wird zum Erkalten auf ein Blech gegossen und man erhält ein praktisch farbloses Festharz mit folgenden Kenndaten:

| | |
|---|---|
| NCO-Gehalt | 0,7 % |
| Uretdiongruppen-Gehalt (ber.) | 12,1 % |
| NCO-Gehalt gesamt (ber.) | 12,8 % |
| Schmelzpunkt | 82 bis 83°C |

### Amidin-Katalysatoren C)

| | | **Amidingehalt in Gew.-%** **(berechnet als CN**_{**2**}**; Molekulargewicht = 40)** |
|---|---|---|
| C1) | 1,5-Diazabicyclo[4.3.0]non-5-en (DBN) | 32,2 |
| C2) | 1,8-Diazabicyclo[5.4.0]undec-7-en (DBU) | 26,3 |
| C3) | 1,2-Dimethyl-tetrahydropyrimidin | 35,7 |

### Katalysatoren D)

- D1): Zinn(II)-octoat
- D2): Dibutylzinndilaurat (DBTL)
- D3): Dibutylzinndiacetat (DBTA)
- D4): Zinkchlorid
- D5): 4-Dimethylaminopyridin
- D6): 1,2-Dimethylimidazol
- D7): Benzyldimethylamin
- D8): Pyridin
- D9): Triethylamin
- D10): N,N-Endoethylenpiperazin (1,4-Diazabicyclo[2.2.2]octan; DABCO)

### Beispiel 1 (ohne Katalysator)

49,2 Gew.-Teile eines hydroxylgruppenhaltigen Polyesters, der aus 66,6 Gew.-Teilen Terephthalsäure, 38,2 Gew.-Teilen Neopentylglykol, 5,3 Gew.-Teilen 1,6-Hexandiol und 4,5 Gew.-Teilen 1,1,1-Trimethylolpropan hergestellt wurde und eine OH-Zahl von 50 und einen Schmelzbereich (bestimmt nach der Differential-Thermoanalyse) von 55 bis 60°C aufweist, werden mit 14,3 Gew.-Teilen der Polyadditionsverbindung B), entsprechend einem Äquivalentverhältnis von Gesamt-NCO zu OH von 1:1, 1,5 Gew.-Teilen eines handelsüblichen Verlaufsmittels (®Perenol F 30 P, Fa. Henkel, Düsseldorf) und 35,0 Gew.-Teilen eines Weißpigmentes (Bayertitan R-KB 4) gründlich gemischt und anschließend mit Hilfe eines Buss Cokneters vom Typ PLK 46 bei 150 U/min und einer Gehäusetemperatur von 40°C im Einzugsbereich sowie an der Welle bzw. von 80°C im Verfahrensteil homogenisiert, wobei Massetemperaturen von 95 bis 100°C erreicht werden. Die erstarrte Schmelze wird mit Hilfe einer Sichtermühle ACM 2 (Fa. Hosokawa Mikropul) mit einem 90 µm Sieb gemahlen und gesiebt.

Die Gelierzeit dieses Pulverlackes beträgt bei 180°C 380 s (Messung nach DIN 55 990, Teil 8, Punkt 5.1).

### Beispiele 2 - 14

Unter Verwendung der in Beispiel 1 genannten Rohstoffe und Mengenverhältnisse werden nach dem in Beispiel 1 beschriebenen Verfahren weiß pigmentierte Pulverlacke hergestellt, wobei der Formulierung zusätzlich jeweils 1,0 Gew.-Teile eines Amidin-Katalysators C) oder eines Katalysators D) zugesetzt werden. Die Art des im jeweiligen Beispiel verwendeten Katalysators ist Tabelle 1 zu entnehmen.

Als Maß für die Reaktivität der so erhaltenen Pulverlacke wurden die Gelierzeiten bei 180°C (Messung nach DIN 55 990, Teil 8, Punkt 5.1) bestimmt. Die gefundenen Werte sind in Tabelle 1 der Gelierzeit des unkatalysierten Pulverlackes aus Beispiel 1 gegenübergestellt.

**Tabelle 1 :**

| Gelierzeiten der unterschiedlich katalysierten Pulverweißlacke aus Beispiel 1 - 14 | | | |
|---|---|---|---|
| Beispiel | | Katalysator | Gelierzeit bei 180°C [s] |
| 1 | (Vergleich) | - | 380 |
| 2 | (erfindungsgemäß) | C1) | 23 |
| 3 | (erfindungsgemäß) | C2) | 41 |
| 4 | (erfindungsgemäß) | C3) | 18 |
| 5 | (Vergleich) | D1) | 260 |
| 6 | (Vergleich) | D2) | 290 |
| 7 | (Vergleich) | D3) | 202 |
| 8 | (Vergleich) | D4) | 358 |
| 9 | (Vergleich) | D5) | 206 |
| 10 | (Vergleich) | D6) | 401 |
| 11 | (Vergleich) | D7) | 387 |
| 12 | (Vergleich) | D8) | 379 |
| 13 | (Vergleich) | D9) | 350 |
| 14 | (Vergleich) | D10) | 397 |

Ein Vergleich der Gelierzeiten zeigt, daß die erfindungsgemäßen, Amidinkatalysatoren C) enthaltenden Pulverlacke eine sehr viel höhere Reaktivität besitzen als vergleichbare Lackformulierungen, die unter Verwendung der üblichen aus der Polyurethanchemie bekannten Katalysatoren hergestellt wurden

### Beispiel 15 und 16 (Verwendung)

Die gemäß Beispiel 2 und 5 erhaltenen Pulverlacke wurden mit einer ESB-Becherpistole bei einer Hochspannung von 70 kV auf entfettete Stahlbleche gespritzt und jeweils 15 min bei einer Temperatur von 150°C, 160°C und 170°C zu glatt verlaufenden, weißen Beschichtungen ausgehärtet. Bei Schichtdicken von etwa 60 µm werden folgende lacktechnischen Eigenschaften gefunden:

Mit Pulverlack gemäß

| | | Beispiel 2 | | | Beispiel 5 (Vergleich) | | |
|---|---|---|---|---|---|---|---|
| | | 150°C | 160°C | 170°C | 150°C | 160°C | 170°C |
| ET^{a)} | | 9,0 | > 9,0 | > 9,0 | 0,6 | 3,4 | 8,0 |
| Glanz^{b)} | 20 ° 60 ° | 80 92 | 83 95 | 80 93 | 79 91 | 77 91 | 73 90 |
| Ac^{c)} | DH Urteil | 50 2 | 50 2 | 50 1 - 2 | 8 3 | 12 3 | 50 2 m |

| | | | | | | | |
|---|---|---|---|---|---|---|---|
| a) ET = Erichsentiefung nach DIN 53156 | | | | | | | |
| b) Glanz = Glanz nach Gardner; 20 ° bzw. 60 ° Reflexionswinkel | | | | | | | |
| c) Ac = Acetontest; DH = Anzahl der Doppelhübe mit getränktem Wattebausch Urteil = 0 = Film intakt 1 = Filmoberfläche angeweicht 2 = Film bis zum Untergrund angequollen 3 = Film aufgelöst m = matt (Glanzverlust) | | | | | | | |

Der Vergleich zeigt, daß mit Hilfe des erfindungsgemäßen Pulverlackes bereits bei deutlich niedrigerer Einbrenntemperatur ein vollvernetzter, elastischer Lackfilm erhalten wird.

### Beispiel 17 (erfindungsgemäß; Mitverwendung eines Katalysators D))

49,2 Gew.-Teile des in Beispiel 1 beschriebenen hydroxylgruppenhaltigen Polyesters werden mit 14,3 Gew.-Teilen der Polyadditionsverbindung B), 1,0 Gew.-Teilen eines handelsüblichen Verlaufsmittels (®Perenol F 30 P, Fa. Henkel, Düsseldorf), entsprechend einem Äquivalentverhältnis von Gesamt-NCO zu OH von 1:1, 0,4 Gew.-Teilen des Amidinkatalysators C1), 0,6 Gew.-Teilen des Katalysators D1) und 35,0 Gew.-Teilen eines Weißpigmentes (Bayertitan R-KB 4) nach dem in Beispiel 1 beschriebenen Verfahren zu einem Weißlack verarbeitet. Die Gelierzeit dieses Pulverlackes beträgt bei 180°C 64 s (Messung nach DIN 55 990, Teil 8, Punkt 5.1).

Das Pulver wird mit einer ESB-Becherpistole bei einer Hochspannung von 70 kV auf ein entfettetes Stahlblech gespritzt und jeweils 15 min bei einer Temperatur von 150°C, 160°C und 170°C zu glatt verlaufenden, weißen Beschichtungen ausgehärtet. Bei Schichtdicken von etwa 65 µm werden folgende lacktechnischen Eigenschaften gefunden:

| | | 150°C | 160°C | 170°C |
|---|---|---|---|---|
| ET^{a)} | | 9,0 | 9,0 | 9,0 |
| Glanz^{b)} | 20 ° 60 ° | 73 92 | 70 91 | 72 92 |
| Ac^{c)} | DH Urteil | 50 2 | 50 2 | 50 2 |

| | | | | |
|---|---|---|---|---|
| a) ET = Erichsentiefung nach DIN 53156 | | | | |
| b) Glanz = Glanz nach Gardner; 20 ° bzw. 60 ° Reflexionswinkel | | | | |
| c) Ac = Acetontest; DH = Anzahl der Doppelhübe mit getränktem Wattebausch Urteil = 0 = Film intakt 1 = Filmoberfläche angeweicht 2 = Film bis zum Untergrund angequollen m = matt (Glanzverlust) | | | | |

## Patentansprüche

1. Polyurethan-Pulverlack, enthaltend
A) eine unterhalb von 40°C in fester und oberhalb von 130°C in flüssiger Form vorliegende Hydroxylgruppen aufweisende Bindemittelkomponente mit einer OH-Zahl von 25 bis 200 und einem mittleren (aus der Funktionalität und dem Hydroxylgehalt berechenbaren) Molekulargewicht von 400 bis'10000,
B) eine unterhalb von 40°C in fester und oberhalb von 125°C in flüssiger Form vorliegende Uretdiongruppen und gegebenenfalls freie Isocyanatgruppen aufweisende Polyadditionsverbindung auf Basis aliphatischer und/oder cycloaliphatischer Diisocyanate,
C) mindestens einen N,N,N'-trisubstituierte Amidinstrukturen enthaltenden Katalysator mit einem Amidingruppengehalt (berechnet als CN₂; Molekulargewicht = 40) von 12,0 bis 47,0 Gew.-%,
gegebenenfalls
D) weitere aus der Polyurethanchemie bekannte Katalysatoren
und gegebenenfalls
E) weitere aus der Pulverlacktechnologie bekannte Hilfs- und Zusatzstoffe,
mit der Maßgabe, daß die Komponenten A) und B) in solchen Mengenverhältnissen vorliegen, daß auf jede Hydroxylgruppe der Komponente A) 0,6 bis 1,4 Isocyanatgruppen der Komponente B) entfallen, wobei unter Isocyanatgruppen der Komponente B) die Summe aus in dimerer Form als Uretdiongruppen vorliegenden Isocyanatgruppen und freien Isocyanatgruppen verstanden wird und der Anteil der Komponente C) an der Gesamtmenge der Komponenten A) bis E) 0,05 bis 5 Gew.-% beträgt.

2. Pulverlack gemäß Anspruch 1, **dadurch gekennzeichnet, daß** die Komponente A) aus einem Hydroxylgruppen aufweisenden Polyester mit einer Erweichungstemperatur, die - bestimmt nach der Differential-Thermoanalyse (DTA) - innerhalb des Temperaturbereiches von 40 bis 120°C liegt, einer OH-Zahl von 25 bis 200 und einem mittleren (aus der Funktionalität und dem Hydroxylgehalt berechenbaren) Molekulargewicht von 1000 bis 5000 besteht.

3. Pulverlack gemäß Anspruch 1, **dadurch gekennzeichnet, daß** die Komponente B) aus einer Uretdiongruppen und gegebenenfalls freie Isocyanatgruppen aufweisenden Polyadditionsverbindung auf Basis von Isophorondiisocyanat besteht.

4. Pulverlack gemäß Anspruch 1, **dadurch gekennzeichnet, daß** die Komponente B) aus einer Polyadditionsverbindung mit
a) einem Gehalt an freien Isocyanatgruppen (berechnet als NCO; Molekulargewicht = 42) von 0 bis 2 Gew.-%,
b) einem Gehalt an Uretdiongruppen (berechnet als C₂N₂O₂; Molekulargewicht = 84) von 3 bis 16 Gew.-%,
c) einem Gehalt an Urethangruppen (berechnet als CHNO₂; Molekulargewicht = 59) von 10 bis 22 Gew.-%,
d) einem Gehalt an Carbonsäureestergruppen (berechnet als CO_{2;} Molekulargewicht = 44) von 0 bis 20 Gew.-%
und/oder
e) einem Gehalt an Carbonatgruppen (berechnet als CO_{3;} Molekulargewicht = 60) von 0 bis 25 Gew.-%
besteht, mit der Maßgabe, daß der Gesamtgehalt an Carbonsäureester- und Carbonatgruppen der Polyadditionsverbindung mindestens 1 Gew.-% beträgt.

5. Pulverlack gemäß Anspruch 1, **dadurch gekennzeichnet, daß** die Komponente C) aus mindestens einem N,N,N'-trisubstituierte Amidinstrukturen enthaltenden Katalysator der allgemeinen Formel 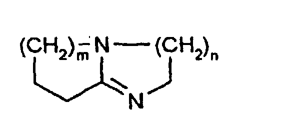 in welcher
m eine ganze Zahl von 1 bis 9 und
n eine ganze Zahl von 1 bis 3 bedeutet,
besteht.

6. Pulverlack gemäß Anspruch 1, **dadurch gekennzeichnet, daß** als Komponente C) 1,5-Diazabicyclo[4.3.0]non-5-en verwendet wird.

7. Pulverlack gemäß Anspruch 1, **dadurch gekennzeichnet, daß** die Komponenten A) und B) in solchen Mengenverhältnissen vorliegen, daß auf jede Hydroxylgruppe der Komponente A) 0,8 bis 1,2 Isocyanatgruppen der Komponente B) entfallen, wobei unter Isocyanatgruppen der Komponente B) die Summe aus in dimerer Form als Uretdiongruppen vorliegenden Isocyanatgruppen und freien Isocyanatgruppen verstanden wird und der Anteil der Komponente C) an der Gesamtmenge der Komponenten A) bis E) 0,1 bis 3 Gew.-% beträgt.

8. Verwendung des Pulverlacks gemäß Anspruch 1 zur Beschichtung beliebiger hitzeresistenter Substrate.

## Claims

1. A polyurethane powder coating containing
A) a binder component present in solid form at below 40°C and in liquid form at above 130°C having hydroxyl groups and having an OH value of 25 to 200 and an average molecular weight (calculable from functionality and hydroxyl content) of 400 to 10000,
B) a polyaddition compound present in solid form at below 40°C and in liquid form at above 125°C having uretidione groups and optionally free isocyanate groups and based on aliphatic and/or cycloaliphatic diisocyanates,
C) at least one catalyst containing N,N,N'-trisubstituted amidine structures having an amidine group content (calculated as CN₂; molecular weight = 40) of 12.0 to 47.0 wt.%,
optionally
D) further catalysts known from polyurethane chemistry
and optionally
E) further auxiliary substances and additives known from powder coating technology,
with the proviso that components A) and B) are present in quantity ratios such that there are 0.6 to 1.4 component B) isocyanate groups for each component A) hydroxyl group, wherein component B) isocyanate groups are taken to mean the sum of the isocyanate groups present in dimeric form as uretidione groups and free isocyanate groups, and the proportion of component C) in the total amount of components A) to E) is 0.05 to 5 wt.%.

2. A powder coating according to claim 1, **characterised in that** component A) consists of a polyester having hydroxyl groups and of a softening temperature (determined by differential thermal analysis (DTA)) within the temperature range of 40 to 120°C, of an OH value of 25 to 200 and an average molecular weight (calculable from functionality and hydroxyl content) of 1000 to 5000.

3. A powder coating according to claim 1, **characterised in that** component B) consists of a polyaddition compound having uretidione groups and optionally free isocyanate groups and based on isophorone diisocyanate.

4. A powder coating according to claim 1, **characterised in that** component B) consists of a polyaddition compound having
a) a free isocyanate group content (calculated as NCO; molecular weight = 42) of 0 to 2 wt.%,
b) a uretidione group content (calculated as C₂N₂O₂, molecular weight = 84) of 3 to 16 wt.%,
c) a urethane group content (calculated as CHNO₂; molecular weight = 59) of 10 to 22 wt.%,
d) a carboxylic acid ester group content (calculated as CO₂; molecular weight = 44) of 0 to 20 wt.%
and/or
e) a carbonate group content (calculated as CO₃; molecular weight = 60) of 0 to 25 wt.%,
with the proviso that the total content of carboxylic acid ester and carbonate groups in the polyaddition compound is at least 1 wt.%.

5. A powder coating according to claim 1, **characterised in that** component C) consists of at least one catalyst containing N,N,N'-trisubstituted amidine structures and of the general formula 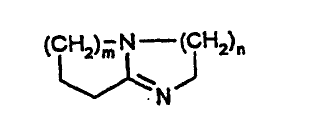 in which
m means an integer from 1 to 9 and
n means an integer from 1 to 3.

6. A powder coating according to claim 1, **characterised in that** 1,5-diazabicyclo[4.3.0]non-5-ene is used as component C).

7. A powder coating according to claim 1, **characterised in that** components A) and B) are present in quantity ratios such that there are 0.8 to 1.2 component B) isocyanate groups for each component A) hydroxyl group, wherein component B) isocyanate groups are taken to mean the sum of isocyanate groups present in dimeric form as uretidione groups and free isocyanate groups, and the proportion of component C) in the entire quantity of components A) to E) is 0.1 to 3 wt.%.

8. Use of the powder coating according to claim 1 for coating any desired heat-resistant substrates.

## Revendications

1. Poudre de polyuréthanne pour revêtement, contenant :
A) un composant liant présentant des radicaux hydroxyle, présent sous forme solide en dessous de 40°C et liquide au-dessus de 130°C, avec un indice OH allant de 25 à 200 et un poids moléculaire moyen (pouvant être calculé à partir de la fonctionnalité et de la teneur en hydroxyle) allant de 400 à 10 000 ;
B) un composé de polyaddition présentant des radicaux uretdione et le cas échéant, des radicaux isocyanate libres, présent sous forme solide en dessous de 40°C et liquide au-dessus de 125°C, à base de diisocyanates aliphatiques et/ou cycloaliphatiques ;
C) au moins un catalyseur contenant une structure amidine N,N,N'-trisubstituée, avec une teneur en radicaux amidine (calculés comme CN₂ ; poids moléculaire = 40) allant de 12,0 à 47,0% en poids, le cas échéant
D) d'autres catalyseurs connus de la chimie des polyuréthannes, et le cas échéant
E) d'autres additifs et auxiliaires connus de la technologie des poudres pour revêtement,
avec la condition que les composants A) et B) sont présents en des rapports quantitatifs tels que pour chaque radical hydroxyle du composant A), on ait 0,6 à 1,4 radical isocyanate du composant B), où par radical isocyanate du composant B), on entend la somme des radicaux isocyanate présents sous forme dimère comme radicaux uretdione et des radicaux isocyanate libres et la fraction du composant C) se situe dans l'intervalle allant de 0,05 à 5% en poids de la quantité totale des composants A) à E).

2. Poudre pour revêtement suivant la revendication 1, **caractérisée en ce que** le composant A) consiste en un polyester présentant des radicaux hydroxyle, avec une température de ramollissement, qui, déterminée par thermoanalyse différentielle (DTA), se situe dans l'intervalle de température allant de 40 à 120°C, avec un indice OH allant de 25 à 200 et un poids moléculaire moyen (pouvant être calculé à partir de la fonctionnalité et de l'indice d'hydroxyle) allant de 1000 à 5000.

3. Poudre pour revêtement suivant la revendication 1, **caractérisée en ce que** le composant B) consiste en un composé de polyaddition présentant des radicaux uretdione et le cas échéant, des radicaux isocyanate libres, à base d'isophoronediisocyanate.

4. Poudre pour revêtement suivant la revendication 1, **caractérisée en ce que** le composant B) consiste en un composé de polyaddition avec
a) une teneur en radicaux isocyanate libres (calculés comme NCO, poids moléculaire = 42) allant de 0 à 2% en poids ;
b) une teneur en radicaux uretdione (calculés comme C₂N₂O₂, poids moléculaire = 84) allant de 3 à 16% en poids ;
c) une teneur en radicaux uréthanne (calculés comme CHNO₂, poids moléculaire = 59) allant de 10 à 22% en poids ;
d) une teneur en radicaux ester d'acide carboxylique (calculés comme CO₂, poids moléculaire = 44) allant de 0 à 20% en poids, et/ou
e) une teneur en radicaux carbonate (calculés comme CO₃, poids moléculaire = 60) allant de 0 à 25% en poids,
avec la condition que la teneur totale en radicaux ester d'acide carboxylique et carbonate du composé de polyaddition s'élève à au moins 1% en poids.

5. Poudre pour revêtement suivant la revendication 1, **caractérisée en ce que** le composant C) consiste en au moins un catalyseur contenant une structure amidine N,N,N'-trisubstituée de la formule générale : 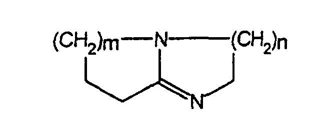 dans laquelle :
m représente un nombre entier allant de 1 à 9, et
n représente un nombre entier allant de 1 à 3.

6. Poudre pour revêtement suivant la revendication 1, **caractérisée en ce que** comme composant C), on utilise le 1,5-diazabicyclo[4.3.0]non-5-ène.

7. Poudre pour revêtement suivant la revendication 1, **caractérisée en ce que** les composants A) et B). sont présents des rapports quantitatifs tels que pour chaque radical hydroxyle du composant A), on ait 0,8 à 1,2 radical isocyanate du composant B), où par radical isocyanate du composant B), on entend la somme des radicaux isocyanate présents sous forme dimère comme radicaux uretdione et des radicaux isocyanate libres et la fraction du composant C) se situe dans l'intervalle allant de 0,1 à 3% en poids de la quantité totale des composants A) à E).

8. Utilisation de la poudre selon la revendication 1, pour le revêtement de substrats résistant à la chaleur, quelconques.
